# EUROPÄISCHE PATENTSCHRIFT

(11) **EP 1 037 776 B1**
(45) Veröffentlichungstag und Bekanntmachung des Hinweises auf die Patenterteilung: **09.11.2005**
(21) Anmeldenummer: 99952309.5
(22) Anmeldetag: 05.08.1999
(51) Int. Cl.: B60S 1/08

(54) **SCHEIBENWISCHVORRICHTUNG**
WINDSHIELD WIPER DEVICE
DISPOSITIF D'ESSUIE-GLACE

(30) Priorität: 21.08.1998 DE 19837980
(43) Veröffentlichungstag der Anmeldung: 27.09.2000
(73) Patentinhaber: ROBERT BOSCH GMBH, 70442 Stuttgart (DE)
(72) Erfinder: LAUK, Detlef, D-77871 Renchen (DE)
(86) Internationale Anmeldenummer: PCT/DE1999/002452
(87) Internationale Veröffentlichungsnummer: WO 2000/010842

(56) Entgegenhaltungen:
- WO-A-96/09944
- DE-A- 4 039 038
- GB-A- 2 052 099
- GB-A- 2 309 802
- PATENT ABSTRACTS OF JAPAN vol. 008, no. 203 (M-326), 18. September 1984 (1984-09-18) & JP 59 092235 A (NIPPON DENSO KK), 28. Mai 1984 (1984-05-28)

## Beschreibung

Die Erfindung betrifft eine Scheibenwischvorrichtung zur Reinigung von Kraftfahrzeugwindschutzscheiben mit den im Oberbegriff des Anspruchs 1 genannten Merkmalen.

### Stand der Technik

Scheibenwischvorrichtungen zur Reinigung von Kraftfahrzeugwindschutzscheiben der gattungsgemäßen Art sind bekannt. Derartige bekannte Vorrichtungen weisen üblicherweise zwei Schaltstellungen für unterschiedliche Wischergeschwindigkeiten sowie eine Intervallstellung auf. Je nach Benetzungsgrad der Windschutzscheibe mit Wasser erfährt der über die Scheibe streichende Wischerarm einen unterschiedlich starken Widerstand durch Reibungskräfte. Die auf die Gummilippen des Wischers wirkenden Reibungskräfte sind bei der schnelleren zweiten Geschwindigkeitsstufe sowie bei nasser Scheibe am geringsten. Die geometrische Auslegung der Scheibenwischvorrichtung hinsichtlich des maximal möglichen Wischfeldes hat somit für diesen Betriebszustand zu erfolgen.

Andererseits ergibt sich bei der meist um zirka 30 % langsameren ersten Geschwindigkeitsstufe ein kleineres Wisch- und damit auch Sichtfeld in den Wendelagen, da die Dynamik der Wischvorrichtung, resultierend aus den Trägheitsmomenten der bewegten Teile, insbesondere bei trockener Scheibe, deutlich geringer ist als bei nasser Scheibe in der schnellen Stufe. Eine entsprechende Vergrößerung des Wischfeldes in der ersten Stufe würde in der zweiten Stufe bei nasser Scheibe zu einer Auslenkung der Scheibenwischer über die Windschutzscheibe hinaus und damit zu Fehlfunktionen beziehungsweise zu Beschädigungen der Wischer führen.

Um die Endstellungen der Wischerarme in beiden Geschwindigkeitsstufen möglichst anzunähern, sind Maßnahmen bekannt, den elektrischen Antriebsmotor der Scheibenwischvorrichtung kurz vor Erreichen der oberen beziehungsweise der unteren Endstellung des Wischerarmes in die langsamere Geschwindigkeitsstufe umzuschalten und dadurch die Trägheitskräfte und damit das Nachlaufen der Scheibenwischvorrichtung auf einem möglichst konstanten Wert zu halten.

So zeigt die WO 96/09944 eine Scheibenwischvorrichtung mit einer zusätzlichen Schaltvorrichtung, die jeweils kurz vor den Wendelagen von einer schnelleren Geschwindigkeitsstufe in eine langsamere Stufe umschaltet. Zu diesem Zweck ist ein elektrischer Schalter mit dem Rotor eines elektrischen Antriebsmotors mechanisch gekoppelt. Der Schalter weist mehrere konzentrische Nockenbahnen zur periodischen Steuerung von Kontaktfahnen auf. Nachteilig an diesem System ist die relativ komplexe und voluminöse Gestaltung des Schalters, der zudem nicht mit herkömmlichen Schaltern, wie sie in Kraftfahrzeugen üblicherweise Verwendung finden, realisiert werden kann. Zudem ist keine integrierte Steuerung einer Parkstellung vorgesehen.

Aus der GB-A-2 309 802 ist eine Scheibenwischvorrichtung gemäß dem Oberbegriff des Anspruchs 1 bekannt.

### Vorteile der Erfindung

Die Eingangs erörterten Problemstellungen werden erfindungegemäß durch die Merkmale des Anspruchs 1 gelöst.

Die erfindungsgemäße Scheibenwischvorrichtung mit den im Anspruch 1 genannten Merkmalen weist insbesondere den Vorteil auf, mittels einfacher mechanischer Bauteile eine sehr effektive Gewährleistung eines maximal möglichen Wischfeldes auf der Windschutzscheibe eines Kraftfahrzeuges zu erzielen. Dies wird im wesentlichen dadurch erreicht, daß in einer zweiten Geschwindigkeitsstufe, die höher liegt als eine erste Geschwindigkeitsstufe des elektrischen Antriebsmotors der Scheibenwischvorrichtung, jeweils kurz vor Erreichen der oberen beziehungsweise der unteren Endstellung (Umkehrlage) des wenigstens einen Wischers in die erste, das heißt langsamere Geschwindigkeitsstufe umgeschaltet wird und kurz nach Verlassen der oberen beziehungsweise unteren Endstellung wieder in die zweite Geschwindigkeitsstufe zurückgeschaltet wird, wobei diese Umschaltung in einfacher Weise mittels eines mit Motordrehzahl umlaufenden Kontaktscheibensystems erfolgt. Vorzugsweise wird diese Umschaltung über drei auf teilweise unterbrochenen Bahnen gleitenden und als Schaltkontakte fungierenden Kontaktfahnen die die Motorgeschwindigkeit periodisch zu ändern vermögen, erreicht. Weiterhin wird erfindungsgemäß die exakte Ablage der Scheibenwischer in der unteren Endstellung nach dem Abschalten gewährleistet. Erfindungsgemäß sind hierzu zwei Kontaktscheibensys eine, Vorteilhafter Weise koaxial zueinander, angeordnet, so daß eine feste Zuordnung der Winkelstellungen der Kontaktscheiben zu der Position der Scheibenwischer auf der Windschutzscheibe ermöglicht ist.

Insbesondere ist vorteilhaft, daß die Kontaktscheibensysteme eine einfache Schnittstelle zu einem Lenkstockschalter aufweisen, wobei der Lenkstockschalter selber seinen einfachen und bewährten Aufbau und Funktion beibehält.

In bevorzugter Ausgestaltung wird mit der Kontaktscheibe nicht die volle Motorspannung, sondern nur eine kleine Steuerspannung geschaltet, mit der dann ein Leistungstransistor oder -thyristor angesteuert werden kann.

Eine weitere bevorzugte Ausgestaltung der Erfindung kann eine elektronische Erfassung der Wischerstellung vorsehen, beispielsweise mittels einer umlaufenden Lochscheibe zur Ansteuerung einer Lichtschranke oder eines Hallsensors. Deren Signale können mittels einer nachgeschalteten Auswerteschaltung zur exakten Einhaltung eines maximalen Wischfeldes genutzt werden.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: ein Prinzipschaltbild zur variablen Geschwindigkeitssteuerung einer Scheibenwischvorrichtung;
- Figuren 2a bis 2d: vier Prinzipschaltbilder mit jeweils unterschiedlichen Schaltstellungen;
- Figuren 3a bis 3f: verschiedene mögliche Schaltstellungen mit entsprechenden Darstellungen der Stromflüsse;
- Figuren 4a bis 4c: eine Veränderung einer Schaltstellung bei Verdrehen einer Kontaktscheibe;
- Figur 5: eine schematische Darstellung einer der Kontaktscheiben;
- Figur 6: ein Prinzipschaltbild zur variablen Geschwindigkeitssteuerung einer Scheibenwischvorrichtung in einer veränderten Ausführungsform;
- Figur 7: eine schematische Gesamtdarstellung eines elektrischen Antriebsmotors mit Kontaktscheibensystemen und
- Figur 8: eine schematische Darstellung einer Wischanlage.

### Beschreibung des Ausführungsbeispiels

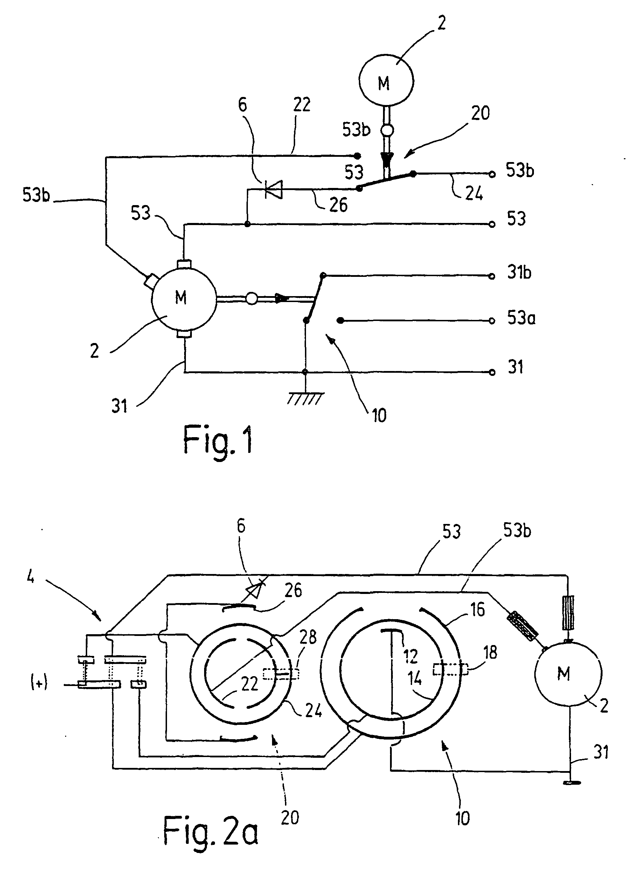

Figur 1 zeigt in einem Prinzipschaltbild eine veränderliche Steuerung der Geschwindigkeit eines Scheibenwischerantriebs zur Reinigung einer Windschutzscheibe eines Kraftfahrzeuges. Mit dieser Vorrichtung kann erreicht werden, daß der Scheibenwischer bei jeder durch einen Fahrer zu wählenden Wischgeschwindigkeit jeweils annähernd die gleiche obere und untere Endstellung erreicht, wodurch die kinematische Auslegung optimal auf ein maximales Wischfeld ausgerichtet werden kann.

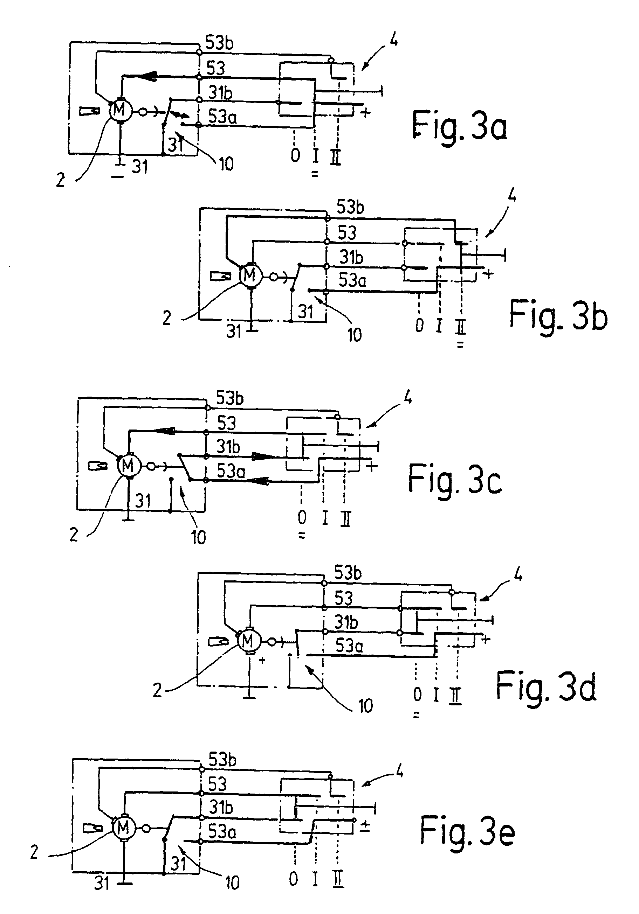

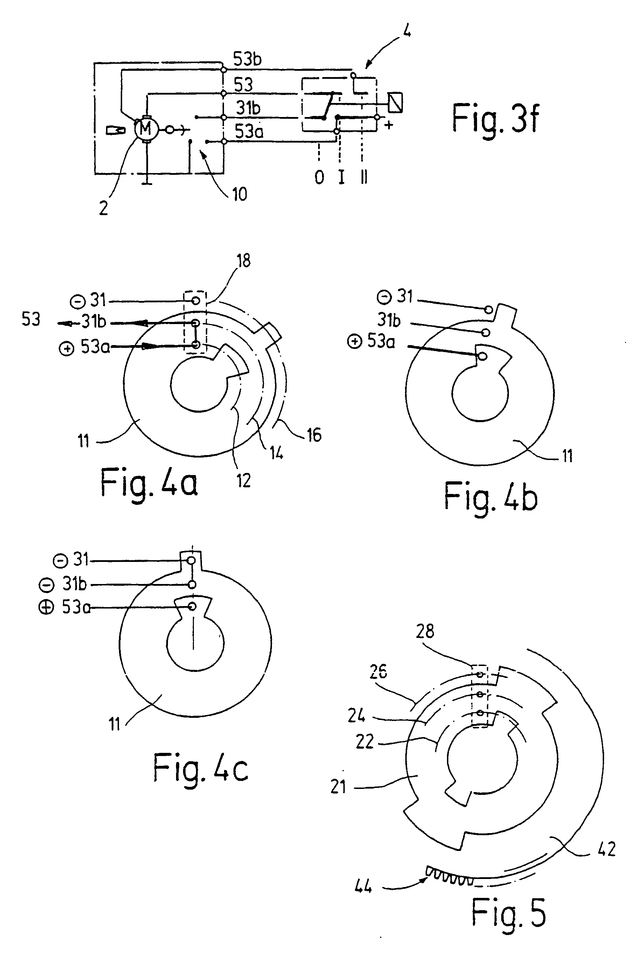

Erkennbar ist ein nur schematisch angedeuteter elektrischer Antriebsmotor 2, der drei elektrische Anschlüsse aufweist. Ein Masseanschluß führt zu einer Klemme 31 und damit zu einem Minuspol einer hier nicht dargestellten Fahrzeugbatterie beziehungsweise zu einer Fahrzeugmasse. Eine Klemme 53 führt über einen in Figur 1 nicht dargestellten Lenkstockschalter (Figur 3) zu einem Pluspol der Fahrzeugbatterie, wenn der Antriebsmotor in einer ersten, das heißt langsameren Stufe I laufen soll. Soll der Antriebsmotor 2 in einer schnelleren zweiten Stufe II betrieben werden, so wird zusätzlich eine Nebenschlußwicklung des Antriebsmotors 2 mit einer Klemme 53b verbunden.

Der Antriebsmotor 2 ist weiterhin mit zwei Kontaktscheibensystemen 10, 20 gekoppelt, die mit einem festen Übersetzungsverhältnis zu einem Rotor 40 des Antriebsmotors 2 permanent umlaufen. Das erste Kontaktscheibensystem 10 ist für den Parklagenlauf verantwortlich und wird weiter unten beschrieben. Das zweite Kontaktscheibensystem 20 ist verantwortlich für ein Zurückschalten von der schnelleren Stufe II in die langsamere Stufe I des Antriebsmotors 2, wenn der wenigstens eine Wischer jeweils kurz vor der oberen beziehungsweise der unteren Endstellung steht.

Hierzu wird jeweils kurz vor einer der Endstellungen über das Kontaktscheibensystem 20 von der Klemme 53b auf die Klemme 53 umgeschaltet, die über eine Verpolschutzdiode 6 mit dem Antriebsmotor 2 verbunden ist und diesen jeweils kurzzeitig in die langsamere Betriebsstufe umschaltet. Beim Verlassen der Endstellung wird die Klemme 53b über das Kontaktscheibensystem 20 wieder auf den Nebenschluß 53b des Antriebsmotors 2 zurückgeschaltet, wodurch der Antriebsmotor 2 wiederum in der schnelleren Betriebsstufe läuft, bis er seine andere Endstellung erreicht. Diese Vorgänge laufen periodisch bei jedem Erreichen einer der Endstellungen der Wischer ab.

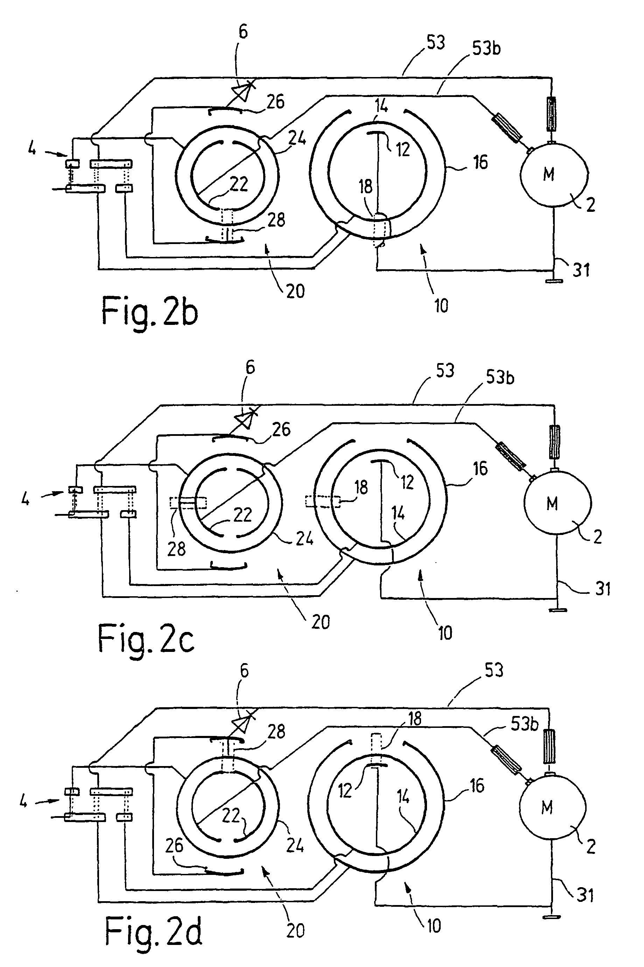

Figur 2 zeigt in vier Prinzipschaltbildern einen vollständigen Motorumlauf in der schnelleren Betriebsstufe II, wobei verdeutlicht wird, wie das Kontaktscheibensystem 20 für eine Umschaltung von der schnelleren Betriebsstufe II in die langsamere Betriebsstufe I jeweils kurz vor Erreichen einer Endstellung des Scheibenwischers sorgt. Gleiche Teile wie in der Figur 1 sind mit gleichen Bezugszeichen versehen und nicht nochmals erläutert. In allen Darstellungen der Figur 2 befindet sich der Lenkstockschalter 4 jeweils in der Stellung II für die schnellere Stufe II.

Das Kontaktscheibensystem 20 weist eine rotierende flache, elektrisch leitende, Kontaktscheibe 21 (Figur 5) auf, auf der ein feststehender Abnehmer 28 mit drei Kontaktfahnen gleitend angreift. Jede dieser Kontaktfahnen gleitet auf einer von drei konzentrisch zueinander angeordneten und elektrisch verbundenen Bahnen der Kontaktscheibe 21. Eine Mittenbahn 24 ist durchgehend gestaltet und steht über die mittlere Kontaktfahne des Abnehmers 28 in Verbindung mit der Klemme 53b am Lenkstockschalter 4 und ist über diesen mit dem Pluspol der Fahrzeugbatterie verbindbar. Eine Innenbahn 22 und eine Außenbahn 26 weisen jeweils zwei um 180° gegenüberliegende Segmentabschnitte mit isolierenden Schichten auf. Durch die Rotation der Kontaktscheibe 21 gleitet die innere oder die äußere Kontaktfahne des Abnehmers 28 jeweils wechselseitig auf einer isolierenden oder einer leitenden Schicht der Innenbahn 22 beziehungsweise der Außenbahn 26 und wirkt damit als einfacher Umschalter. Somit kann die Klemme 53b entweder mit der entsprechenden Klemme der Nebenschlußwicklung am Antriebsmotor 2 oder über eine Verpolschutzdiode 6 mit der Hauptwicklung verbunden werden.

Figur 2a zeigt eine erste Rotorstellung, bei der die Mittenbahn 24 den Abnehmer 28 mit der Innenbahn 22 und damit mit der Klemme 53b der Nebenschlußwicklung des Antriebsmotors 2 verbindet. Der Antriebsmotor 2 läuft in dieser Schaltstellung in der schnelleren Betriebsstufe II. Das rechte Kontaktscheibensystem 10 ist für den Parklagenlauf beim Abschalten des Scheibenwischers in oder kurz vor der Parklage des Scheibenwischers verantwortlich und soll hier zunächst nicht näher betrachtet werden.

Figur 2b zeigt den Rotor 40 kurz vor Erreichen der oberen Endstellung der Wischer. Hierbei wird der Abnehmer 28 gleichzeitig mit der Mittenbahn 24 und der Außenbahn 26 verbunden, wobei die innere Kontaktfahne auf eine isolierende Schicht der Innenbahn 22 trifft. Die äußere Kontaktfahne ist über die Verpolschutzdiode 6 mit der Klemme 53 des Antriebsmotors 2 verbunden, der dadurch in der langsameren Betriebsstufe I läuft und damit eine konstante Position der Endstellung des Scheibenwischers gewährleisten kann.

Figur 2c zeigt eine weitere Stellung des Rotors 40 des Antriebsmotors 2 während einer Abwärtsbewegung der Wischer. Hierbei ist wiederum die mittlere Kontaktfahne des Abnehmers 28 über die Mittenbahn 24 und die Innenbahn 22 mit der inneren Kontaktfahne verbunden, das heißt, die Klemme 53b des Antriebsmotors 2 ist geschaltet. Der Antriebsmotor 2 läuft wiederum in seiner schnelleren Betriebsstufe II.

Die Figur 2d zeigt schließlich eine Betriebsstellung kurz vor Erreichen der unteren Endstellung der Scheibenwischer. Auch hier ist wieder der Abnehmer 28 mit der Mittenbahn 24 und der Außenbahn 26 der Kontaktscheibe 21 verbunden, wodurch die Klemme 53 mit dem Pluspol der Batterie verbunden ist, und der Antriebsmotor 2 in seiner langsameren Betriebsstufe I läuft.

Figur 3 verdeutlicht die Funktionen des Parkstellungslaufs, der im wesentlichen für ein sicheres und exaktes Absetzen des Wischers in der Parklage sorgen soll, wobei gleiche Teile wie in den vorangegangenen Figuren mit gleichen Bezugszeichen versehen sind.

Figur 3a zeigt den Antriebsmotor 2 in seiner ersten langsameren Betriebsstufe I. Hierbei ist der Lenkstockschalter 4 in der ersten Schaltstufe I, der Pluspol der Batterie ist mit der Klemme 53 des Antriebsmotors 2 verbunden. Die Klemme 31 am Antriebsmotor 2 ist mit dem Minuspol der Fahrzeugbatterie verbunden.

Figur 3b zeigt den Lenkstockschalter 4 in der zweiten Stufe, in der der Antriebsmotor 2 in der schnelleren Geschwindigkeitsstufe II umläuft. Die Klemme 53b des Antriebsmotors 2 ist hierbei mit dem Pluspol der Fahrzeugbatterie verbunden, wogegen die Klemme 53 nicht geschaltet ist.

Figur 3c verdeutlicht das Abschalten der Scheibenwischer nach dem Betrieb. Der Lenkstockschalter 4 ist in einer Stellung Null. Da sich die Wischer noch nicht in ihrer Endstellung befinden, muß der Antriebsmotor 2 so lange weiterlaufen, bis die Parklage der Wischer erreicht ist. Zu diesem Zweck ist der Antriebsmotor 2 mit dem Kontaktscheibensystem 10 versehen, das in allen Rotorstellungen, außer in der Endstellung, einen Stromfluß von einer Klemme 31b zu einer Klemme 53a ermöglicht und damit über eine Kontaktbrücke im Lenkstockschalter 4 eine elektrische Verbindung vom Pluspol der Fahrzeugbatterie zum Anschluß 53 des Antriebsmotors 2.

Figur 3d zeigt die Annäherung des Wischers an seine Parklage. Der Stromfluß zwischen dem Anschluß 53a und dem Anschluß 31b ist hierbei bereits unterbrochen, jedoch läuft der Antriebsmotor 2 durch seine Trägheit noch weiter.

Figur 3e zeigt die endgültig erreichte Parklage. Hierbei ist der Antriebsmotor 2 über das Kontaktscheibensystem 10 durch eine Verbindung von 31 zu 31b beziehungsweise 53 kurzgeschlossen. Der Motor wird somit aktiv gebremst.

Figur 3f zeigt schließlich einen Intervallbetrieb des Antriebsmotors 2. Die Steuerung erfolgt über ein Relais, und ein Loslaufen kann durch eine sogenannte Direktbestromung entsprechend Figur 3a beziehungsweise einen Parkstellungslauf entsprechend den Figuren 3c, 3d und 3e erreicht werden.

Die Figuren 4a bis 4c zeigen in drei schematischen Darstellungen einen Bewegungsablauf des Kontaktscheibensystems 10 bei Erreichen der Parklage des wenigstens einen Scheibenwischers. Hierbei ist erkennbar, wie über die Verdrehung der Kontaktscheibe 11 von der Verbindung der Klemmen 31b und 53a (Figur 4a) auf eine Verbindung der Klemmen 31 mit 31b umgeschaltet (Figur 4c) und damit der Antriebsmotor 2 kurzgeschlossen wird.

Figur 5 zeigt die Kontaktscheibe 21 des Kontaktscheibensystems 20, das zur Geschwindigkeitsumschaltung vorgesehen ist. Erkennbar sind hier die durchgehende Mittenbahn 24 sowie die jeweils zweifach unterbrochene und an diesen unterbrochenen Stellen mit einer isolierenden Schicht versehene Innenbahn 22 und Außenbahn 26. Der Abnehmer 28 mit seinen drei auf der Kontaktscheibe laufenden Kontaktfahnen ist hierbei nur angedeutet. Ebenfalls nur angedeutet ist in dieser Darstellung die Trägerscheibe 42, auf der oben und unten die beiden Kontaktscheiben 11 und 21 befestigt sind, und die außen mit einer Verzahnung 44 zum Eingriff eines mit dem Rotor 40 des elektrischen Antriebsmotors 2 verbundenen Schneckenrades versehen ist.

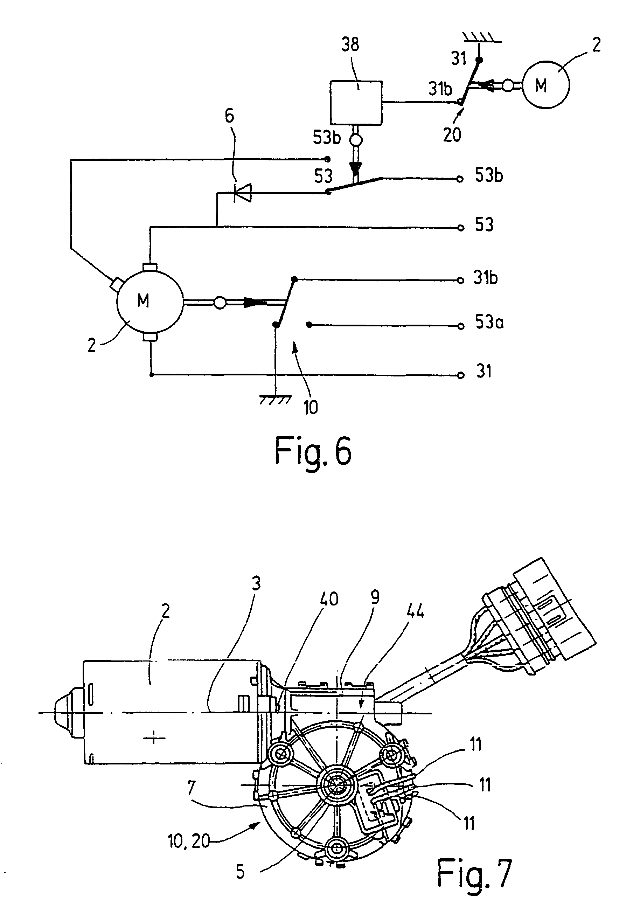

Figur 6 zeigt weiterhin eine alternative Ansteuerung des elektrischen Antriebsmotors 2. Anstatt über das Kontaktscheibensystem 20 direkt den vollen Betriebsstrom zu schalten, dient dieses lediglich zur Ansteuerung eines elektrischen Schalters 38, beispielsweise eines Thyristors, der dann die volle Leistung zum Antriebsmotor 2 durchschalten kann, und so eine bessere Verschleißbeständigkeit der Kontaktfahnen des Abnehmers 28 des Kontaktscheibensystems 20 sicherstellen kann. Der übrige Aufbau ist analog zu Figur 1 und soll hier nicht nochmals erläutert werden.

Figur 7 zeigt eine schematische Gesamtdarstellung eines elektrischen Antriebsmotors 2 mit in einem Getriebegehäuse des durch eine Motorabtriebswelle angetriebenen Schneckenrades eingebauten Kontaktscheibensystemen 10 und 20. Die Drehachsen 3 und 5 des Antriebsmotors 2 und der koaxial zueinander angeordneten und in einem gemeinsamen Gehäuse 7 zusammengebauten Kontaktscheibensysteme 10, 20 liegen versetzt senkrecht zueinander. Die Kontaktscheiben 11, 21 sind auf einer gemeinsamen Trägerscheibe 42 (Figur 5) montiert, die eine Außenverzahnung 44 (Figur 5) aufweist und mit einem am Rotor 40 des elektrischen Antriebsmotors 2 angebrachten Schneckenrad im permanenten und nahezu spielfreien Eingriff steht. Der Rotor 40 und das Schneckenrad sind nicht detailliert dargestellt. Diese befinden sich in einem Gehäuse 9 des Antriebsmotors 2, wobei das Gehäuse 9 und das Gehäuse 7 einteilig ausgebildet sein können. Die Übersetzung dieser Verzahnung 44 muß so gewählt sein, daß ein mit den Schwenkbewegungen der Scheibenwischer synchroner Schaltablauf gewährleistet ist. In Figur 7 sind ferner Anschlußleitungen 11 zu erkennen, die die auf der Kontaktscheibe schleifenden Kontakte mit den entsprechenden Klemmen verbinden.

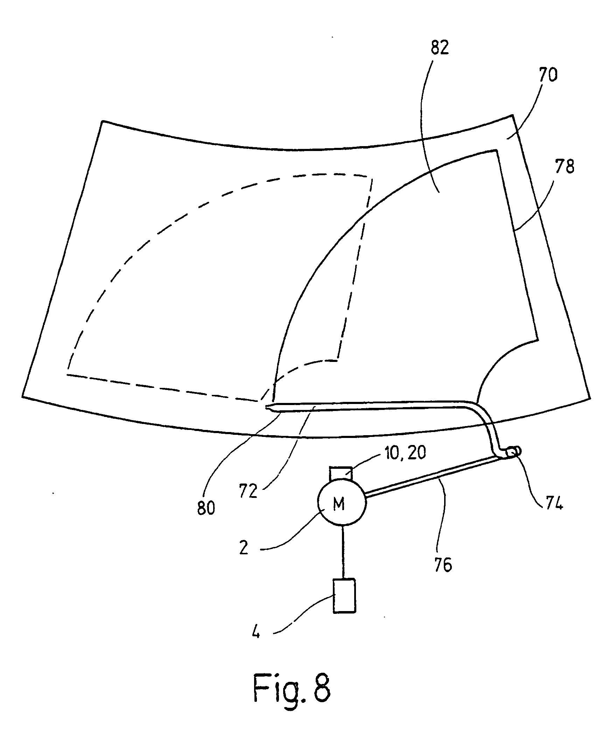

In Figur 8 ist eine schematische Ansicht einer Scheibenwischvorrichtung gezeigt. Hierbei ist einer Windschutzscheibe 70 eines Kraftfahrzeugs eine Scheibenwischvorrichtung zugeordnet, die wenigstens einen Wischerarm 72 aufweist. Entsprechend unterschiedlicher Ausführungsformen der Wischvorrichtungen können lediglich eine oder auch mehr als zwei Wischerarme 72 vorgesehen sein. Dieser ist um eine karosseriefeste Drehachse 74 in eine Schwenkbewegung versetzbar. Entsprechend einem zwischen dem Antriebsmotor 2 und der Drehachse 74 angeordneten Getriebegestänge 76 wird hierbei die Drehbewegung eines Rotors des Antriebsmotors 2 in die Schwenkbewegung umgesetzt, wobei der Wischerarm 72 zwischen einer oberen Endstellung 78 und einer unteren Endstellung 80 ein Wischfeld 82 überstreicht. Der Antriebsmotor 2 ist über den Lenkstockschalter 4 in bekannter Weise betätigbar. Zusätzlich ist das mit dem Antriebsmotor 2 ausgebildete Kontaktscheibensystem 10, 20 schematisch angedeutet, mittels dem die anhand der vorhergehenden Figuren erläuterte Steuerung des Wischerarms 72 erfolgt. Die Parklage, die über das Kontaktscheibensystem angefahren wird, befindet sich etwas unterhalb der unteren Endstellung 80.

## Patentansprüche

1. Scheibenwischvorrichtung, insbesondere zur Reinigung einer Windschutzscheibe (70) eines Kraftfahrzeuges, mit wenigstens einem zwischen einer oberen (78) und einer unteren (80), das Wischfeld (82) definierenden, Endstellung verlagerbaren Wischer (72), welcher von einem elektrischen Antriebsmotor (2) angetriebenen ist, und mit einer Steuereinrichtung, die als Eingangsgrößen eine aktuelle Wischerposition sowie Schaltsignale eines manuell bedienbaren Schaltmittels (4) verarbeitet und als Ausgangsgröße eine Versorgungsspannung des elektrischen Antriebsmotors (2) und damit die Wischergeschwindigkeit steuert, wobei der wenigstens eine Wischer (72) in einer ersten Schaltstellung des Schaltmittels (4) mit einer ersten Geschwindigkeit (I) und in einer zweiten Schaltstellung des Schaltmittels (4) mit einer zweiten Geschwindigkeit (II), die größer ist als die erste Geschwindigkeit (I), von Endstellung (78, 80) zu Endstellung (80, 78) läuft, und wobei der wenigstens eine Wischer (72) in der zweiten Schaltstellung, jeweils in Nähe der oberen (78) und der unteren (80) Endstellung, mit der ersten Geschwindigkeit entsprechend der ersten Schaltstellung des Schaltmittels (4) läuft, wobei der elektrische Antriebsmotor (2) ein synchron mit der Motordrehzahl umlaufendes erstes Kontaktscheibensystem (20) zur periodischen Umschaltung zwischen der zweiten (II) und der ersten Geschwindigkeit (I) aufweist, **dadurch gekennzeichnet, daß** der elektrische Antriebsmotor (2) zusätzlich zu dem ersten Kontaktscheibensystem (20) ein synchron mit der Motordrehzahl umlaufendes weiteres Kontaktscheibensystem (10) zur positionsgenauen Abschaltung des wenigstens einen Wischers (72) in einer außerhalb des Wischfeldes (82) und unterhalb der unteren Endstellung (80) liegenden Parklage nach Betätigung des Schaltmittels (4) in die Aus-Stellung (0) aufweist.

2. Scheibenwischvorrichtung nach Anspruch 1, **dadurch gekennzeichnet, daß** das erste Kontaktscheibensystem (20) aus einer flachen, elektrisch leitenden Kontaktscheibe (21) mit einer Innenbahn (22), einer Mittenbahn (24) und einer Außenbahn (26), die jeweils konzentrisch um eine gemeinsame Drehachse angeordnet sind, besteht.

3. Scheibenwischvorrichtung nach Anspruch 2, **dadurch gekennzeichnet, daß** die Mittenbahn (24) durchgehend ist und die Innenbahn (22) und die Außenbahn (26) jeweils zwei um 180° versetzte Segmentabschnitte mit isolierender Beschichtung aufweisen.

4. Scheibenwischvorrichtung nach Anspruch 3, **dadurch gekennzeichnet, daß** ein ortsfester dreipoliger Abnehmer (28) mit der Kontaktscheibe (21) permanent in Berührung steht, wobei eine mittlere Kontaktfahne (28b) mit der durchgehenden Mittenbahn (24) permanent in leitender Verbindung steht und wobei je nach Winkelstellung der Kontaktscheibe (21) entweder eine auf der Innenbahn (22) gleitende innere Kontaktfahne (28a) mit der Mittenbahn (24) oder die auf der Außenbahn (26) gleitende äußere Kontaktfahne (28c) mit der Mittenbahn (24) elektrisch leitend verbunden ist.

5. Scheibenwischvorrichtung nach Anspruch 1, **dadurch gekennzeichnet, daß** das weitere Kontaktscheibensystem (10) aus einer flachen, elektrisch leitenden Kontaktscheibe (11) mit einer Innenbahn (12), einer Mittenbahn (14) und einer Außenbahn (16), die jeweils konzentrisch um eine gemeinsame Drehachse angeordnet sind, besteht.

6. Scheibenwischvorrichtung nach Anspruch 5, **dadurch gekennzeichnet, daß** die Mittenbahn (14) durchgehend ist und die Innenbahn (12) und die Außenbahn (16) jeweils einen Segmentabschnitt mit isolierender Beschichtung aufweisen.

7. Scheibenwischvorrichtung nach Anspruch 6, **dadurch gekennzeichnet, daß** ein ortsfester dreipoliger Abnehmer (18) mit der Kontaktscheibe (11) des weiteren Kontaktscheibensystems (10) permanent in Berührung steht, wobei eine mittlere Kontaktfahne (18b) mit der durchgehenden Mittenbahn (14) permanent in leitender Verbindung steht und wobei je nach deren Winkelstellung entweder eine auf der Innenbahn (12) gleitende innere Kontaktfahne (18a) mit der Mittenbahn (14) oder eine auf der Außenbahn (16) gleitende äußere Kontaktfahne (18c) mit der Mittenbahn (14) elektrisch leitend verbunden ist.

8. Scheibenwischvorrichtung nach einem der vorhergehenden Ansprüche, **dadurch gekennzeichnet, daß** die Kontaktscheibe (11) des weiteren Kontaktscheibensystems (10) und die Kontaktscheibe (21) des ersten Kontaktscheibensystems (20) auf gegenüberliegenden Seiten einer gemeinsamen Trägerscheibe (42) befestigt sind, die synchron mit den Schwenkbewegungen des wenigstens einen Wischers (72) umläuft.

9. Scheibenwischvorrichtung nach Anspruch 8, **dadurch gekennzeichnet, daß** die Trägerscheibe (42) eine Außenverzahnung (44) aufweist, die mit einem vom elektrischen Antriebsmotor (2) angetriebenem Schneckenrad im Eingriff steht.

10. Scheibenwischvorrichtung nach einem der vorhergehenden Ansprüche, **dadurch gekennzeichnet, daß** das erste Kontaktscheibensystem (20) einen elektrischen Schalter (38) steuert.

11. Scheibenwischvorrichtung nach Anspruch 10, **dadurch gekennzeichnet, daß** der elektrische Schalter (38) ein Leistungstransistor oder -thyristor ist.

12. Scheibenwischvorrichtung nach Anspruch 1, **dadurch gekennzeichnet, daß** die Kontaktscheibensysteme (10, 20) zur optischen Erfassung der aktuellen Wischerposition mit Lochscheiben, Lichtschranke und nachgeschalteter Auswerteschaltung versehen sind.

13. Scheibenwischvorrichtung nach Anspruch 1, **dadurch gekennzeichnet, daß** die Kontaktscheibensysteme (10, 20) zur Erfassung der aktuellen Wischerposition mit Lochscheiben, Hallsensor und nachgeschalteter Auswerteschaltung versehen sind.

## Claims

1. Windscreen wiper device, in particular for cleaning a windscreen (70) of a motor vehicle, having at least one wiper (72) which can be displaced between an upper end position (78) and a lower end position (80) defining the wiper pattern (82) and which is driven by an electric driving motor (2), and having a control device which processes a current wiper position and switching signals of a manually operable switching means (4) as input variables and, as output variable, controls a supply voltage of the electric driving motor (2) and therefore the wiper speed, the at least one wiper (72) moving from end position (78, 80) to end position (80, 78) at a first speed (I), in a first switching position of the switching means (4), and, in a second switching position of the switching means (4), at a second speed (II) which is greater than the first speed (I), and the at least one wiper (72), in the second switching position, moving, in each case in the vicinity of the upper end position (78) and the lower end position (80), at the first speed corresponding to the first switching position of the switching means (4), the electric driving motor (2) having a first contact disc system (20) revolving at the rotational speed of the motor, for the periodic switching over between the second speed (II) and the first speed (I), **characterized in that**, in addition to the first contact disc system (20), the electric driving motor (2) has a further contact disc system (10) revolving synchronously with the rotational speed of the motor, for the positionally precise switching off of the at least one wiper (72) in a parking position, which is situated outside the wiper pattern (82) and below the lower end position (80), after the switching means (4) is actuated into the off position (0).

2. Windscreen wiper device according to Claim 1, **characterized in that** the first contact disc system (20) comprises a flat, electrically conductive contact disc (21) with an inner track (22), a central track (24) and an outer track (26) which are in each case arranged concentrically about a common axis of rotation.

3. Windscreen wiper device according to Claim 2, **characterized in that** the central track (24) is continuous, and the inner track (22) and the outer track (26) each have two segment sections which are offset by 180° and have an insulating coating.

4. Windscreen wiper device according to Claim 3, **characterized in that** a positionally fixed three-pole connector (28) is permanently in contact with the contact disc (21), a central contact lug (28b) being permanently in conductive connection with the continuous central track (24) and, depending in each case on the angular position of the contact disc (21), either an inner contact lug (28a), which slides on the inner track (22), is electrically conductively connected to the central track (24), or the outer contact lug (28c), which slides on the outer track (26), is electrically conductively connected to the central track (24).

5. Windscreen wiper device according to Claim 1, **characterized in that** the further contact disc system (10) comprises a flat, electrically conductive contact disc (11) with an inner track (12), a central track (14) and an outer track (16) which are in each case arranged concentrically about a common axis of rotation.

6. Windscreen wiper device according to Claim 5, **characterized in that** the central track (14) is continuous and the inner track (12) and the outer track (16) in each case have a segment section with an insulating coating.

7. Windscreen wiper device according to Claim 6, **characterized in that** a positionally fixed, three-pole connector (18) is permanently in contact with the contact disc (11) of the further contact disc system (10), a central contact lug (18b) being permanently conductively connected to the continuous central track (14) and, depending in each case on its angular position, either an inner contact lug (18a), which slides on the inner track (12), is electrically conductively connected to the central track (14), or an outer contact lug (18c), which slides on the outer track (16), is electrically conductively connected to the central track (14).

8. Windscreen wiper device according to one of the preceding claims, **characterized in that** the contact disc (11) of the further contact disc system (10) and the contact disc (21) of the first contact disc system (20) are fastened on opposite sides of a common carrier disc (42) which revolves synchronously with the pivoting movements of the at least one wiper (72).

9. Windscreen wiper device according to Claim 8, **characterized in that** the carrier disc (42) has an outer toothing (44) which is in engagement with a worm wheel driven by the electric driving motor (2).

10. Windscreen wiper device according to one of the preceding claims, **characterized in that** the first contact disc system (20) controls an electric switch (38).

11. Windscreen wiper device according to Claim 10, **characterized in that** the electric switch (38) is a power transistor or power thyristor.

12. Windscreen wiper device according to Claim 1, **characterized in that** the contact disc systems (10, 20) are provided with perforated discs, a light barrier and downstream evaluation circuit, for the optical detection of the current wiper position.

13. Windscreen wiper device according to Claim 1, **characterized in that** the contact disc systems (10, 20) are provided with perforated discs, a Hall sensor and downstream evaluation circuit, for detection of the current wiper position.

## Revendications

1. Dispositif d'essuie-glace, notamment pour le nettoyage d'un pare-brise (70) d'un véhicule automobile, avec au moins un essuie-glace (72) qui peut se déplacer entre une position finale supérieure (78) et une autre inférieure (80) qui définissent le champ d'essuyage (82), qui est entraîné par un moteur d'entraînement électrique (2), et avec un dispositif de commande qui traite en tant que grandeurs de départ une position effective de l'essuie-glace ainsi que des signaux de commutation d'un moyen de commutation (4) à commande manuelle, et qui commande en tant que grandeur de sortie une tension d'alimentation du moteur d'entraînement électrique (2) et donc la vitesse de l'essuie-glace, au moins un essuie-glace (72) passant d'une position finale (78, 80) à une autre (80, 78) dans une première position de commutation du moyen de commutation (4) avec une première vitesse (I) et dans une deuxième position de commutation du moyen de commutation (4) avec une deuxième vitesse (II) supérieure à la première, alors que l'essuie-glace (72) dans la deuxième position de commutation, chaque fois à proximité de la position finale supérieure (78) et de la position finale inférieure (80) fonctionne avec la première vitesse suivant la première position de commutation du moyen de commutation (4), le moteur d'entraînement électrique (2) présentant un premier système de rondelles de contact (20) tournant de manière synchronisée avec le régime du moteur pour une commutation régulière entre la deuxième vitesse (II) et la première vitesse (I),
**caractérisé en ce que**
le moteur d'entraînement électrique (2) présente en plus du premier système de rondelles de contact (20) un autre système de rondelles de contact (10) tournant de manière synchronisée avec le régime du moteur afin de couper l'au moins un essuie-glace (72) de manière précise dans une position de pause en dehors du champ d'essuyage (82) et sous la position finale inférieure (80) après l'actionnement du moyen de commutation (4) en position d'arrêt (0).

2. Dispositif d'essuie-glace selon la revendication 1,
**caractérisé en ce que**
le premier système de rondelles de contact (20) se compose d'une rondelle de contact (21) plane électriquement conductrice dotée d'une voie intérieure (22), d'une voie centrale (24) et d'une voie extérieure (26) respectivement disposées de manière concentrique autour d'un axe de rotation commun.

3. Dispositif d'essuie-glace selon la revendication 2,
**caractérisé en ce que**
la voie centrale (24) est continue et les voies intérieure (22) et extérieure (26) présentent respectivement deux portions de segment décalées de 180° avec un revêtement isolant.

4. Dispositif d'essuie-glace selon la revendication 3,
**caractérisé en ce qu'**
un récepteur tripolaire fixe (28) est en permanence en contact avec la rondelle de contact (21), une cosse de contact centrale (28b) étant reliée en permanence à la voie centrale continue (24) et, selon la position angulaire de la rondelle de contact (21), soit une cosse de contact intérieure (28a) coulissant sur la voie intérieure (22) est reliée par conduction électrique à la voie centrale (24), soit une cosse de contact extérieure (28c) coulissant sur la voie extérieure (26) est reliée par conduction électrique à la voie centrale (24).

5. Dispositif d'essuie-glace selon la revendication 1,
**caractérisé en ce que**
l'autre système de rondelles de contact (10) se compose d'une rondelle de contact (11) plate électriquement conductrice avec une voie intérieure (12), une voie centrale (14) et une voie extérieure (16) respectivement disposées de manière concentrique autour d'un axe de rotation commun.

6. Dispositif d'essuie-glace selon la revendication 5,
**caractérisé en ce que**
la voie centrale (14) est continue et les voies intérieure (12) et extérieure (16) présentent respectivement une portion de segment avec un revêtement isolant.

7. Dispositif d'essuie-glace selon la revendication 6,
**caractérisé en ce qu'**
un récepteur tripolaire fixe (18) est en permanence en contact avec la rondelle de contact (11) de l'autre système de rondelles de contact (10), une cosse de contact centrale (18b) étant reliée de manière conductrice en permanence à la voie centrale continue (14) et, selon la position angulaire de la rondelle de contact (11), soit une cosse de contact intérieure (18a) coulissant sur la voie intérieure (12) est reliée par conduction électrique à la voie centrale (14), soit une cosse de contact extérieure (18c) coulissant sur la voie extérieure (16) est reliée par conduction électrique à la voie centrale (14).

8. Dispositif d'essuie-glace selon l'une quelconque des revendications précédentes,
**caractérisé en ce que**
la rondelle de contact (11) de l'autre système de rondelles de contact (10) et la rondelle de contact (21) du premier système de rondelles de contact (20) sont fixées sur les côtés opposés d'une rondelle de support commune (42) qui tourne de manière synchronisée avec les mouvements oscillants d'au moins un essuie-glace (72).

9. Dispositif d'essuie-glace selon la revendication 8,
**caractérisé en ce que**
la rondelle de support (42) présente une denture extérieure (44) engrenée avec une roue à vis sans fin entraînée par le moteur d'entraînement électrique.

10. Dispositif d'essuie-glace selon l'une quelconque des revendications précédentes,
**caractérisé en ce que**
le premier système de rondelles de contact (20) commande un commutateur électrique (38).

11. Dispositif d'essuie-glace selon la revendication 10,
**caractérisé en ce que**
le commutateur électrique (38) est un transistor ou un thyristor de puissance.

12. Dispositif d'essuie-glace selon la revendication 1,
**caractérisé en ce que**
les systèmes de rondelles de contact (10, 20) pour la détection optique de la position effective de l'essuie-glace sont pourvus de rondelles perforées, de barrières photoélectriques et de circuits d'exploitation montés en aval.

13. Dispositif d'essuie-glace selon la revendication 1,
**caractérisé en ce que**
les systèmes de rondelles de contact (10, 20) pour la détection de la position effective de l'essuie-glace sont pourvus de rondelles perforées, de capteurs à effet Hall et de circuits d'exploitation montés en aval.
